# EUROPEAN PATENT APPLICATION

(11) **EP 2 371 981 A1**
(43) Date of publication of application: **05.10.2011**
(21) Application number: 11168984.0
(22) Date of filing: 13.05.2009
(51) Int. Cl.: C22C 38/22, H01M 8/02

(54) **Ferritic alloy compositions**

(30) Priority: 13.05.2008 US 119648
(62) Divisional of application: 09747450.6
(71) Applicant: UT-Battelle, LLC, Oak Ridge, TN 37831-6258 (US)
(72) Inventor: Pint, Bruce, A., Knoxville, TN Tennessee 37909 (US); Armstrong, Beth, L, Clinton, TN Tennessee 37716 (US); Wright, Ian G., Oak Ridge, TN Tennessee 37830 (US); Brady, Michael, P., Oak Drive, TN Tennessee 37830 (US); Tortorelli, Peter F., Knoxville, TN Tennessee 37922 (US); Armstrong, Timothy, R., Clinton, TN Tennessee 37716 (US); Judkins, Christine, Knoxville, TN Tennessee 37922 (US)
(74) Representative: Bloch & Bonnétat

(57) **Abstract**

The invention relates to a ferritic alloy composition comprising about 10 to 14 wt. % Cr, about 7 to 11 wt. % Mo or about 10 to 20 wt. % W, and the balance Fe.

## Description

### STATEMENT REGARDING FEDERALLY SPONSORED RESEARCH

. The United States Government has rights in this invention pursuant to contract no. DE-AC05-00OR22725 between the United States Department of Energy and UT-Battelle, LLC.

### FIELD OF THE INVENTION

. This invention relates to the field of ferritic alloy compositions, and is particularly concerned with such an alloy for use in components of solid oxide fuel cells.

### BACKGROUND OF THE INVENTION

. A solid oxide fuel cell (SOFC) is an electrochemical conversion device that produces electricity directly from fuel. These fuel cells are characterized by their electrolyte material and, as the name implies, the SOFC has a solid oxide, or ceramic, electrolyte.

. Ceramic fuel cells operate at much higher temperatures than polymer based ones. A solid oxide fuel cell typically contains an interconnector that acts as a current collector and provides the electrical connection between individual cells. Replacing brittle ceramics (e.g. LaCrO3) with a metallic interconnector in solid oxide fuel cells would greatly improve their mechanical durability and reduce the cost per cell.

. However, the high temperature environment of a SOFC may cause degradation to metals. Furthermore, the coefficient of thermal expansion (CTE) mismatch between the metallic interconnector and the fuel cell components (i.e. anode, cathode and electrolyte) can cause mechanical damage to these functional layers during fabrication of the cell or during thermal cycling in operation. In some designs, it is possible to avoid exposing the metal to the oxidizing exhaust gas thereby minimizing degradation to the reducing (fuel-side) gas environment. However, the metal may need some degree of oxidation resistance to enable sintering of the ceramic functional layers. In most designs, the CTE mismatch is a critical issue.

### SUMMARY OF THE INVENTION

. It is an object of the present invention to provide ferritic alloy compositions having a lower coefficient of thermal expansion (CTE) mismatch and improved oxidation resistance. These and other objectives have been met by the present invention, which provides, in one aspect, a ferritic alloy composition comprising about 16 to 20 wt. % chromium (Cr), about 7 to 11 wt. % molybdenum (Mo), and the balance iron (Fe). The ferritic alloy compositions of this aspect of the invention have reduced coefficient of thermal expansion mismatch.

. In another aspect, the present invention provides a ferritic alloy composition comprising about 10 to 14 wt. % Cr, about 7 to 11 wt. % Mo or about 10 to 20 wt. % (tungsten) W, and the balance Fe. The ferritic alloy compositions of this aspect of the invention have improved oxidation resistance.

. The advantages of the ferritic alloy compositions of one aspect of the present invention include a coefficient of thermal expansion comparable to that of yttria-stabilized zirconia. Accordingly, the thermally induced strains do not give rise to stresses which are sufficient to cause cracks in a SOFC. In another aspect of the present invention, the ferritic alloy compositions form a stable, adherent and thin layer of chromium oxide which protects the underlying metal from further oxygen induced degradation.

. For a better understanding of the present invention, together with other and further advantages, reference is made to the following detailed description, and its scope will be pointed out in the subsequent claims.

### BRIEF DESCRIPTION OF THE FIGURES

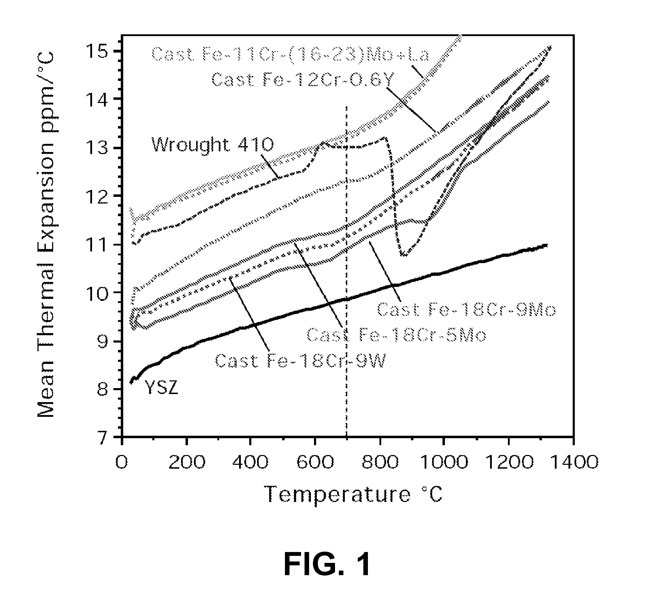

. Figure 1. Mean coefficient of thermal expansion (CTE) as a function of temperature for various model alloys compared to wrought commercial SS410 and sintered Fe-13 wt % Cr - 15 wt % Y (410Y) and yttria-stabilized ZrO₂ (YSZ). The data was collected on the specimen during the second heating to 1300°C. The anticipated operating temperature of ~700°C is shown as a dashed line.

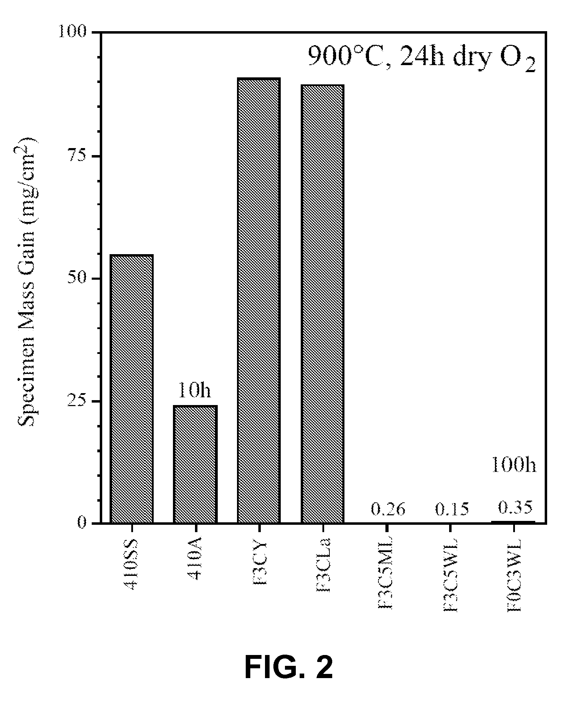

. Figure 2. Specimen mass gain for various Fe-Cr alloys after isothermal exposure for 10-100h at 900°C in dry flowing O₂.

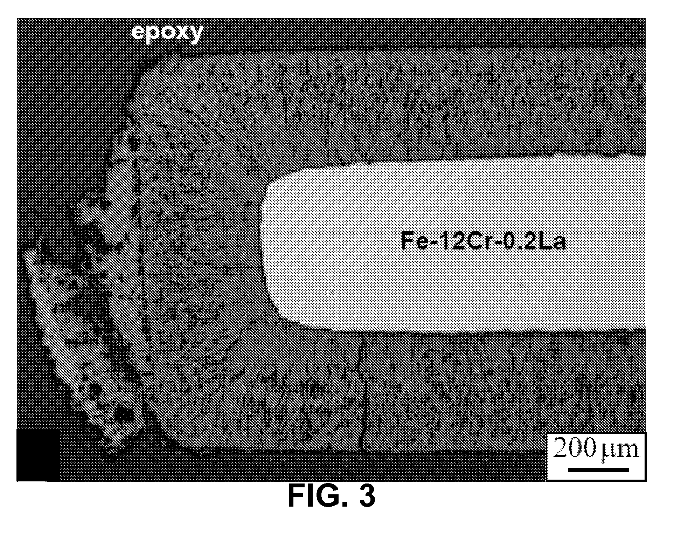

. Figure 3. Light microscopy of Fe-12 wt.%Cr+0.2La (F3CL) polished sections after exposure at 900°C in dry flowing 02 for 10h.

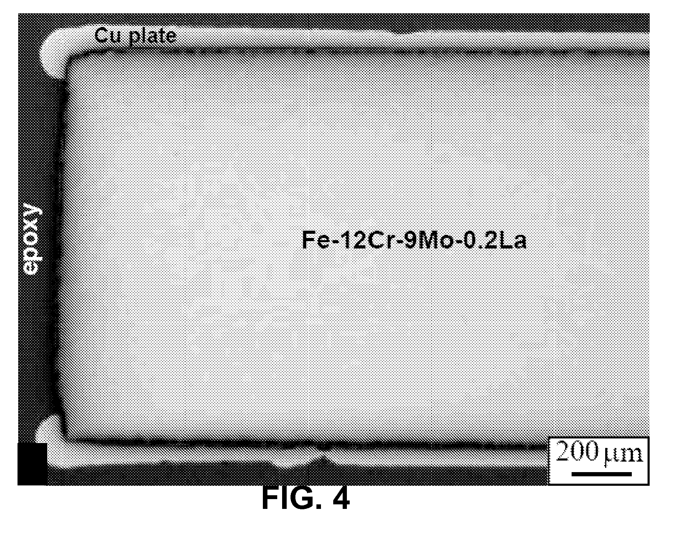

. Figure 4. Light microscopy of Fe-12 wt.%Cr-9Mo+0.2La (F3C5ML) polished sections after exposure at 900°C in dry flowing O₂ for 24h.

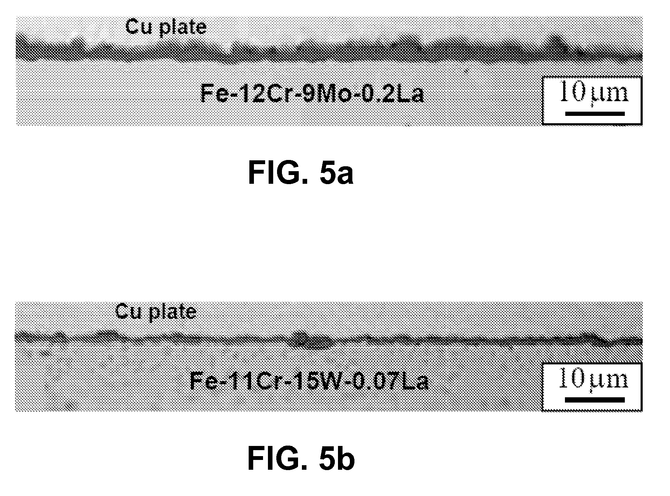

. Figure 5a. Light microscopy of Fe-12 wt.%Cr-9Mo+0.2La (F3C5ML) polished sections after exposure at 900°C in dry flowing O₂ for 24h.

. Figure 5b. Light microscopy of Fe-11 wt.%Cr-15W+0.07La (F3C5WL) polished sections after exposure at 900°C in dry flowing O₂ for 24h.

### DETAILED DESCRIPTION OF THE INVENTION

. Throughout this specification, parameters are defined by maximum and minimum amounts. Each minimum amount can be combined with each maximum amount to define a range.

. In one aspect, the invention is based on the discovery by the inventors that addition of high amounts of Mo reduces the coefficient of thermal expansion mismatch or improves oxidation resistance of Fe-Cr alloy compositions. In another aspect, the invention is based on the discovery by the inventors that addition of high amounts of W improves the oxidation resistance of Fe-Cr alloy compositions.

. Thus, the present invention is directed to a ferritic alloy composition comprising:
(i) about 16 to 20 wt. % Cr, about 7 to 11 wt. % Mo, and the balance Fe; or
(ii) about 10 to 14 wt. % Cr, about 7 to 11 wt. % Mo or about 10 to 20 wt. % W, and the balance Fe.

. In one aspect, the ferritic alloy compositions of the present invention comprises about 16 to 20 wt. % Cr, about 7 to 11 wt. % Mo, and the balance Fe. In this aspect of the present invention, the minimum total wt. % of Cr in the ferritic alloy composition is about 16 %, preferably about 17 %, and more preferably about 18%. The maximum total wt. % of Cr in the ferritic alloy composition of this aspect of the present invention is about 20 %, preferably about 19 %, and more preferably about 18 %. Similarly, the minimum total wt. % of Mo in the ferritic alloy composition is about 7 %, preferably about 8 %, and more preferably about 9 %. The maximum total wt. % of Mo in the ferritic alloy composition of this aspect of the present invention is about 11 %, preferably about 10 %, and more preferably about 9 %. In one embodiment, the ferritic alloy composition consists essentially of about 16 to 20 wt. % Cr, about 7 to 11 wt. % Mo, and the balance Fe.

. The ferritic alloy compositions of the present invention comprising about 16 to 20 wt. % Cr, about 7 to 11 wt. % Mo, and the balance Fe have a reduced coefficient of thermal expansion compared to traditional metallic interconnectors, such as 410SS. The term "coefficient of thermal expansion" as used herein refers to the change in energy that is stored in the intermolecular bonds between atoms during heat transfer. Typically, when the stored energy increases, the length of the molecular bond increase. As a result, solids typically expand in response to heating and contract on cooling; this response to temperature change is expressed as its coefficient of thermal expansion. The coefficient of thermal expansion is typically presented as a single "mean" or averge value and is assumed to be constant. However, the thermal expansion behavior changes as a function of temperature, therefore, the mean changes as a function of temperature.

. Yttria-stabilized zirconia has a mean coefficient of thermal expansion in the range of about 8 ppm/°C⁻¹ to about 11.5 ppm/°C⁻¹ in a temperature range from room temperature to 1000°C. The ferritic alloy compositions of the present invention comprising about 16 to 20 wt. % Cr, about 7 to 11 wt. % Mo, and the balance Fe have a coefficient of thermal expansion that is close to that of yttria-stabilized zirconia. For example, such compositions of the present invention have a mean coefficient of thermal expansion in the range of about 9 ppm/°C⁻¹ to about 12 ppm/°C⁻¹ in a temperature range from room temperature to 1000°C.

. Therefore, the mismatch between the ferritic alloy compositions of the present invention comprising about 16 to 20 wt. % Cr, about 7 to 11 wt. % Mo, and the balance Fe and yttria-stabilized zirconia is less than 1.5 ppm/°C⁻¹, preferably less than about 1.2 ppm/°C⁻¹, and more preferably less than about 1.0 ppm/°C⁻¹. For example, the mean coefficient of thermal expansion of one ferritic alloy composition of the present invention at 700°C is 10.86 and that of yttria-stabilized zirconia at 700°C is about 9.84. Therefore, the mismatch is 1.02 ppm/°C⁻¹.

. In another aspect, the ferritic alloy compositions of the present invention comprise about 10 to 14 wt. % Cr, about 7 to 11 wt. % Mo, and the balance Fe. In this aspect, the minimum total wt. % of Cr in the ferritic alloy composition is about 10 %, preferably about 11 %, and more preferably about 12%. The maximum total wt. % of Cr in the ferritic alloy composition of this aspect is about 14 %, preferably about 13 %, and more preferably about 12 %. Similarly, the minimum total wt. % of Mo in the ferritic alloy composition is about 7 %, preferably about 8 %, and more preferably about 9 %. The maximum total wt. % of Mo in the ferritic alloy composition of this aspect of the present invention is about 11 %, preferably about 10 %, and more preferably about 9 %. In one embodiment, the ferritic alloy compositions of the present invention comprise or consist essentially of about 10 to 14 wt. % Cr, about 7 to 11 wt. % Mo, and the balance Fe.

. In yet another aspect, the ferritic alloy compositions of the present invention comprise about 10 to 14 wt. % Cr, about 10 to 20 wt. % W, and the balance Fe. In this aspect, the minimum total wt. % of Cr in the ferritic alloy composition is about 10 %, preferably about 11 %, and more preferably about 12%. The maximum total wt. % of Cr in the ferritic alloy composition of this aspect is about 14 %, preferably about 13 %, and more preferably about 12 %. The minimum total wt. % of W in the ferritic alloy composition is about 10 %, preferably about 11 %, more preferably about 12 %, even more preferably about 13 %. The maximum total wt. % of W in the ferritic alloy composition of this aspect of the preset invention is about 20 %, preferably about 19 %, more preferably about 18 %, and most preferably about 17 %. In one embodiment, the ferritic alloy compositions of the present invention comprise or consist essentially of about 10 to 14 wt. % Cr, about 10 to 20 wt. % W, and the balance Fe

. The ferritic alloy compositions of the present invention comprising about 10 to 14 wt. % Cr, about 7 to 11 wt. % Mo or about 10 to 20 wt. % W, and the balance Fe have improved oxidation resistance due to the slow formation of a dense adherent chromia layer (e.g., Cr-rich oxide layer). After a 24h exposure at 900°C in laboratory air, the mass gain of the Cr-oxide layer generally is less than 0.35 mg/cm², more generally less than 0.30 mg/cm², and even more generally less than 0.20 mg/cm². Fe-12Cr alloys without Mo and W generally rapidly form a Fe-rich oxide layer.

. Chromia-formation of the ferritic alloy compositions of this aspect of the invention are maintained after 5,000h exposure at 900°C in laboratory air. The parabolic rate constant for the oxidation reaction for the 5,000h exposure at 900°C in laboratory air is generally less than 7 x 10⁻¹⁴g²/cm⁴s, 5 x 10⁻¹⁵g²/cm⁴s, more generally less than 1 x 10⁻¹⁵g²/cm⁴s, and even more generally less than 7 x 10⁻¹⁶g²/cm⁴s.

. The ferritic alloy compositions of the present invention can further comprise or consist essentially of one or more rare earth elements. The presence of a rare earth element in the ferritic alloy composition typically helps stabilize the oxide layers and assists in reducing the electrical resistively of the oxide scale on the surface of the ferritic alloy composition.

. The term "rare earth element" as used herein refers to any one or more of the rare earth metal elements in the group of the lanthanide elements 57 to 71, and also includes scandium, zirconium, hafnium and yttrium. Elements belonging to the group of lanthanide elements 57 to 71 are well known to those in the art. Examples of lanthanide elements 57 to 71 include lanthanum (La), cerium (Ce), praseodymium (Pr), neodymium (Nd), promethium (Pm), samarium (Sm),europium (Eu), gadolinium (Gd), terbium (Tb), dysprosium (Dy), holmium (Ho), Erbium (Er), thulium (Tm), ytterbium (Yb), and lutetium (Lu).

. The rare earth element is generally present in the ferritic alloy composition in a total level in the range of about 0.01 wt. % to about 0.5 wt. %. The minimum total wt. % of rare earth element in the ferritic alloy composition is about 0.01 %, preferably about 0.05 %, and more preferably about 0.1 %. The maximum total wt. % of rare earth element in the ferritic alloy composition is about 0.5 %, preferably about 0.4 %, and more preferably about 0.3 %.

. In one embodiment, the ferritic alloy composition of the present invention comprise or consist essentially of about 18 wt. % Cr, about 9 wt. % Mo, La, and the balance Fe.

. In another embodiment, the ferritic alloy compositions of the present invention comprise or consist essentially of about 12 wt. % Cr, about 9 wt. % Mo, about 0.2 wt. % La, and the balance Fe.

. In a further embodiment, the ferritic alloy compositions of the present invention comprise or consist essentially of 11 wt. % Cr, about 15 wt. % W, about 0.2 wt. % La, and the balance Fe.

. In another aspect, the present invention provides an interconnector component, such as a plate, for collecting electrical current from a fuel cell. In this aspect, the interconnector component is formed from a ferritic alloy composition described above.

. In a further aspect of the present invention, a porous support for a solid oxide fuel cell is provided. The porous support is a component of the solid oxide fuel cell onto which an anode material or cathode material can be deposited. The solid oxide fuel cell can be, for example, a planar or tubular solid oxide fuel cell. In this aspect, the porous support comprises a ferritic alloy composition described above.

. The mean pore size of the porous support is generally in the range from about 0.8 µm to about 50 µm, more generally in the range from about 1 µm to about 40 µm, and more generally in the range from about 2 µm to about 30 µm. The porosity of the porous support is typically from about 25 vol % to about 60 vol %, more typically from about 30 vol % to about 50 vol %.

. The ferritic alloy composition is not limited to its use as an interconnector component for collecting electrical current from a solid oxide fuel cell or as a porous support for a solid oxide fuel cell. Other applications for the ferritic alloy composition will be apparent to those skilled in the art. For example, the ferritic alloy composition can also be used for dental and surgical instruments, nozzles, valve parts, hardened steel balls, and wear surfaces.

### EXAMPLES

### Example 1: Ferritic Alloy Compositions

. The alloys were induction melted and cast in a water-chilled copper mold. The chemical compositions were determined by inductively couple plasma and combustion analyses, Table I gives the composition in wt.%. Rods (typically 25mm long x 3mm diameter) were cut from the as-cast material for thermal expansion measurements using a dual push rod dilatometer. A specimen of yttria-stabilized zirconia (YSZ) was sintered and machined to obtain coefficient of thermal expansion data for this common electrolyte material. Two measurements from room temperature to 1300°C and back to room temperature were made on each rod. For oxidation experiments, the cast material was rolled to approximately 1.5mm thickness and annealed for 2 min. at 900°C to develop a finer grain structure than the as-cast material. The oxidation experiments were conducted isothermally for 4-100 h at 900°C in dry flowing O₂.

**Table I. Chemical compositions determined by ICP and combustion analysis in wt. %. The balance of the composition is Fe in each case.**

| | Cr | Y | La | W | Mo | Si | Al | Mn | O | C |
|---|---|---|---|---|---|---|---|---|---|---|
| 410SS | 11.8 | < | < | < | 0.02 | 0.37 | 0.04 | 0.52 | < | 0.13 |
| 410A | 12.6 | < | < | < | 0.16 | 0.88 | < | 0.17 | 0.24 | 0.01 |
| F3CY | 12.3 | 0.29 | < | < | < | 0.02 | < | < | 0.01 | < |
| F3C2Y | 12.0 | 0.64 | < | < | < | < | < | < | < | < |
| F3CL | 12.3 | < | 0.20 | < | < | 0.01 | < | < | < | < |
| F3C5WL | 11.0 | < | 0.07 | 15.1 | < | < | < | < | < | < |
| F0C3WL | 18.0 | < | 0.02 | 9.0 | < | < | < | < | 0.01 | < |
| F3C5ML | 12.0 | < | 0.21 | < | 8.6 | 0.01 | 0.01 | < | < | < |
| F3C0ML | 11.2 | < | 0.05 | < | 16.2 | 0.01 | < | < | 0.01 | < |
| F3C15ML | 10.9 | < | 0.02 | < | 23.0 | < | < | < | 0.01 | < |
| F0C3ML | 18.0 | < | < | < | 5.1 | 0.01 | < | < | 0.02 | < |
| **F0C5ML** | 17.7 | < | < | 0.03 | 8.6 | 0.01 | < | 0.01 | 0.02 | 0.01 |

| | | | | | | | | | | |
|---|---|---|---|---|---|---|---|---|---|---|
| < denotes less than 0.01 | | | | | | | | | | |

### Example 2: Coefficient of Thermal Expansion Analysis

. Figure 1 shows the mean coefficient of thermal expansion (CTE) data for various model alloys from room temperature to 1300°C. The baseline comparison is between wrought type 410 stainless steel (Fe~12Cr, see Table I) and dense, sintered yttria-stabilized zirconia (YSZ, ~7wt.%Y₂O₃), the electrode material. At a target operating temperature of ~700°C (dashed line in Figure 1), the mismatch is >3ppm/°C between these materials, Table II.

. The CTE curve for 410SS is complicated by the phase transformation to austenite at ~850°C. The addition of minor alloying additions, such as 0.6 Y or 0.1 La had only a minor effect on the CTE (see Figure 1), mainly by suppressing the phase transformation. Fe-18Cr-9W in wt.% showed a much lower CTE than 410SS.

. Alloys from the Fe-Cr-Mo system also were evaluated. Alloys with 11-12 %Cr and 16- 23 %Mo did not show a decrease in the CTE. However, Fe-12Cr-9W did show a reduction to 11.3ppm/°C.

. Replacing W with Mo in the Fe-20Cr-3Mo composition in at.% (or Fe-18Cr-5Mo in wt.%), showed a similar low CTE (11.35) as with W (11.08). Fe-18Cr-8.6Mo resulted in a lower CTE of 10.86ppm/°C (see Figure 1). With this alloy, the CTE mismatch with YSZ at 700°C is ~1ppm/°C, see Table II.

**Table II. Mean CTE at 700°C of various Fe-Cr alloys during second heating.**

| | Mean CTE at 700°C |
|---|---|
| 410SS | 13.02 (typical baseline ferritic alloy with low CTE) |
| F3C2Y | 12.31 |
| F3CL | 12.27 |
| F3C5WL | 11.62 |
| F0C3WL | **11.08** |
| F3C5ML | 11.34 |
| F3C0ML | 13.19 |
| F3C15ML | 13.23 |
| F0C3ML | 11.35 |
| **F0C5ML** | **10.86** |
| YSZ | **9.84** (SOFC electrolyte) |

### Example 3: Mass Gain Analysis for Fe-Cr alloys After Isothermal Oxidation

. Figure 2 shows the specific specimen mass gain for various Fe-Cr alloys after isothermal oxidation for 4-100h at 900°C in dry, flowing O₂. The high mass gains for type 410 stainless steel, sintered 410 powder (410A) and the 12%Cr alloys reflect the rapid formation of FeO on these alloys. The low mass gains for the other alloys containing Mo or W reflects the slow formation of a Cr-rich oxide. This behavior is expected for 18%Cr (F0C3WL) but is unexpected for alloys with only 12%Cr and either 15%W (F3C5WL) or 9%Mo (F3C5ML). The formation of a Cr-rich scale with only 12%Cr is unexpected because this level of Cr is typically not sufficient to form a Cr-rich oxide scale (see Figure 3). Oxidation is a competitive reaction process, therefore a sufficient Cr level is needed in the alloy to form Cr-rich oxide and prevent the formation of faster-growing (i.e. non-protective) Fe-rich oxides. All three of these alloys contain La but the addition of La or Y without the refractory metal addition did not improve the oxidation behavior.

. For the F3C5WL alloy, chromia-formation was maintained during a 5,000h exposure at 900°C in laboratory air with an oxidation rate constant of 6x10⁻¹⁴ g²/cm⁴s.

### Example 4: Metallography Analysis

. Metallography was performed on the specimens shown in Figure 2. Figure 3 shows the metal consumed after 10h at 900°C in dry O₂ for Fe-12%Cr-0.2La. A rapid growing Fe-rich oxide formed under these conditions. In contrast, Figures 4 and 5a show the thin protective Cr-rich oxide formed on Fe-12Cr-9Mo-0.2La (F3C5ML) after the same exposure. The addition of Mo changed the selective oxidation behavior of the alloy. Figure 5b shows a similar effect for Fe-11 Cr-15W-0.07La (F3C5WL). These alloys both contain 5at.% refractory metal addition.

### Example 5: Grain Size Analysis

. The grain size of the Fe-12Cr alloys with only Y and La additions was 29±12µm and 79±17µm, respectively. The grain size of the Fe-12Cr-9Mo+La alloy was 64±15µm. Therefore, the effect on the oxidation behavior cannot be attributed to a reduction in the alloy grain size. The grain size of the Fe-11Cr-15W+La alloy could not be determined accurately because of a large number of small W-rich precipitates in the alloy. The precipitates are apparent in the alloy in Figure 5b, particularly compared to Fig. 5a where they are not observed with 5% Mo. At the 3at.%W (9wt.%) level in Fe-18wt%Cr, W-rich precipitates are already evident.

. Thus, while there have been described what are presently believed to be the preferred embodiments of the invention, changes and modifications can be made to the invention and other embodiments will be know to those skilled in the art, which fall within the spirit of the invention, and it is intended to include all such other changes and modifications and embodiments as come within the scope of the claims as set forth herein below.

## Claims

1. A ferritic alloy composition comprising about 10 to 14 wt. % Cr, about 7 to 11 wt. % Mo or about 10 to 20 wt. % W, and the balance Fe.

2. The composition according to claim 1, wherein the compositions comprises about 10 to 14 wt. % Cr, about 7 to 11 wt. % Mo, and the balance Fe.

3. The composition according to claim 1, wherein the compositions comprises about 10 to 14 wt. % Cr, about 10 to 20 wt. % W, and the balance Fe

4. The composition according to claim 1, further comprising one or more rare earth elements.

5. The composition according to claim 4, wherein the rare earth elements are present in the composition in a total amount of about 0.01 to 0.5 wt. %.

6. The composition according to claim 5, wherein the rare earth element comprises one or more elements selected from the group consisting of: an element in the group of the lanthanide elements 51 to 71, scandium, yttrium, and combinations thereof.

7. The composition according to claim 2, wherein the ferritic alloy composition comprises about 12 wt. % Cr, about 9 wt. % Mo, about 0.2 wt. % La, and the balance Fe.

8. The composition according to claim 3, wherein the ferritic alloy composition comprises about 11 wt. % Cr, about 15 wt. % W, about 0.2 wt. % La, and the balance Fe.

9. A ferritic alloy interconnector plate for collecting electrical current from a solid oxide fuel cell, said plate comprising a ferritic alloy composition according to claim 1.

10. A porous support for a solid oxide fuel cell, said porous support comprising a ferritic alloy composition according to claim 1.
